# EUROPÄISCHE PATENTSCHRIFT

(11) **EP 1 575 879 B1**
(45) Veröffentlichungstag und Bekanntmachung des Hinweises auf die Patenterteilung: **09.04.2008**
(21) Anmeldenummer: 03785758.8
(22) Anmeldetag: 06.12.2003
(51) Int. Cl.: C04B 35/043, F27B 7/00, F27D 1/00, B22D 41/02

(54) **VERSATZ ZUR HERSTELLUNG EINES FEUERFESTEN KERAMISCHEN FORMK RPERS, DARAUS GEBILDETER FORMK RPER UND EINE VERWENDUNG**
BATCH FOR PRODUCING A REFRACTORY CERAMIC SHAPED BODY, SHAPED BODY MADE THEREFROM, AND A USE THEREOF
MELANGE SERVANT A PRODUIRE UN CORPS MOULE CERAMIQUE REFRACTAIRE, CORPS MOULE FORME A PARTIR DE CE MELANGE ET SON UTILISATION

(30) Priorität: 17.01.2003 DE 10301881
(43) Veröffentlichungstag der Anmeldung: 21.09.2005
(73) Patentinhaber: Refractory Intellectual Property GmbH & Co. KG, 1100 Wien (AT)
(72) Erfinder: EDER, Johann, A-8700 Leoben (AT); NEUBÖCK, Rainer, A-8010 Graz (AT)
(74) Vertreter: Becker, Thomas
(86) Internationale Anmeldenummer: PCT/EP2003/013823
(87) Internationale Veröffentlichungsnummer: WO 2004/065323

(56) Entgegenhaltungen:
- EP-A- 0 019 995
- GB-A- 668 187
- GB-A- 897 357
- GB-A- 938 040
- US-A- 3 210 205
- US-A- 3 948 671

## Beschreibung

Die Erfindung betrifft einen Versatz zur Herstellung eines feuerfesten keramischen Formkörpers, einen aus dem Versatz gebildeten ungebrannten beziehungsweise gebrannten Formkörper sowie eine Verwendungsmöglichkeit.

Feuerfeste keramische Produkte werden beispielsweise in basische und nicht basische Erzeugnisse unterteilt. Zu den basischen Produkten zählen solche auf Basis von MgO (Magnesia), wie Magnesia- oder Magnesia-Chromit-Erzeugnisse.

Derartige, insbesondere rein magnesitische Sorten zeigen eine gute Verschleißbeständigkeit, häufig jedoch ein unbefriedigendes Infiltrationsverhalten gegenüber metallurgischen Schlacken, wie sie zum Beispiel bei Verfahren zur Herstellung von Edelstahl typisch sind. Solche Verfahren sind als AOD (= argon-oxygen-decarb-Verfahren) oder VOD (= vacuum-oxygen-decarburization-Verfahren) bekannt. Auch das Abplatzverhalten ist unbefriedigend.

Neben diesen rein magnesitischen Sorten sind gebrannte (auch kohlenstoffgebundene) Steine bekannt, die zumindest einen erheblichen Anteil an Dolomit [CaMg(CO₃)₂] in gebrannter Form enthalten. Je nach Lagerstätte schwankt der Gehalt an MgO beziehungsweise CaO des Dolomits. Er liegt größenordnungsmäßig bei 60 Gew.-% CaO und 40 Gew.-% MgO. Als Nebenbestandteile findet man SiO₂, Fe₂O₃, Al₂O₃, MnO (< 3 Gew.-%) in Form ihrer Calciumverbindungen. Routschka "Feuerfeste Werkstoffe" (ISBN 3-8027-3144-1), Abschnitt 4.2.6.1 lässt sich ein typischer SiO₂-Gehalt von 0,5 bis 1,5 Gew.-%, ein typischer Fe₂O₃-Gehalt von 0,5 bis 1,0 Gew.-% und ein typischer Al₂O₃-Gehalt von 0,2 bis 0,8 Gew.-% entnehmen.

Je nachdem, ob die Versätze ausschließlich aus Dolomit oder überwiegend aus Dolomit (neben Magnesiazusätzen) bestehen, werden die daraus gebildeten Formteile als Dolomit- oder Magdol-Produkte bezeichnet. Dolomit als Versatzkomponente bedeutet jeweils gebrannter Dolomit beziehungsweise Sinterdolomit, also CaO + MgO-haltige Komponenten.

Der Verschleiß eines Dolomit- bzw. Magdol-Steins ist deutlich höher als bei einem reinen Magnesiastein. Solche CaO + MgO-haltige Formteile weisen jedoch eine deutlich geringere Infiltrationsneigung auf und platzen weniger ab.

Die GB 897 357 A offenbart einen Ofen mit einer feuerfesten Auskleidung, die Dolomit enthält. Ein konkreter Versatz dazu enthält eine Grobfraktion von tot gebranntem Dolomit und eine Feinfraktion von tot gebranntem MgO neben 4,5 Gew.-% Kohlenteer. Durch Erhitzen wird der Versatz gemischt. Die ungebrannten Steine, die aus dem Versatz hergestellt werden, werden im Ofen auf > 1800° F erwärmt.

Die US-A-3 210 205 beschreibt ein mit Kohlenstoff gebundenes feuerfestes Produkt, welches aus einem Versatz gebildet wird, der Eisenoxid in reduzierter Form enthält.

In der GB 688 187 A wird ein Verfahren zur Konsolidierung von feuerfesten Materialien beschrieben, und zwar durch Zugabe von Komponenten, die nicht feuerfest sind. Der Versatz enthält 2 Gew.-% Silika.

In der DE 100 10 918 A1 wird ein Versatz zur Herstellung eines feuerfesten keramischen Formkörpers offenbart, der folgende, eigenständige Komponenten umfasst:
a) 80 bis 97 Gew.-% Schmelzmagnesit, Sintermagnesit oder Mischungen daraus mit einem MgO-Gehalt > 93 Gew.-% und einer Korngröße < 8 mm,
b) 3 bis 20 Gew.-% CaO in einer Kornfraktion < 1 mm.

Wesentlicher Aspekt ist, dass das Calciumoxid als eigenständige Komponente der magnesitischen Hauptkomponente zugegeben wird.

Die aus diesem Versatz gebildeten Formteile stellen quasi einen Kompromiss zwischen den bekannten Magnesia- und Magdol-Erzeugnissen dar. Bei der Anwendung entsprechender Erzeugnisse wird die erwartete Verbesserung der Verschleißbeständigkeit und die geringere Infiltrationsneigung erreicht; es kann jedoch zu Abplatzungen kommen.

Der Erfindung liegt die Aufgabe zugrunde, die aus der DE 100 10 918 A1 bekannten Formkörper hinsichtlich ihrer Abplatzneigung zu verbessern, ohne auf die guten Verschleiß- und Korrosionseigenschaften (wie bei rein magnesitischen Formkörpern) und Infiltrationsbeständigkeit verzichten zu müssen.

Dabei geht die Erfindung von folgender Überlegung aus: Die dem Feuer (der Schmelze) zugewandte Seite eines feuerfesten keramischen Formteils ist im besonderen Maße abplatzgefährdet. Diese Seite ist den höchsten Temperaturen ausgesetzt (teilweise über 1.700° C). Ziel der Entwicklung war es, die Produkteigenschaften hinsichtlich ihres Druckerweichens (gemäß DIN-EN 993-8, 1997) zu verbessern und das Gefüge flexibler zu machen. Dies wird durch folgende Maßnahmen erreicht. Es werden geringe Anteile an Schmelzphasen zugelassen, ohne die Feuerfestigkeit nachteilig zu beeinflussen. Auf diese Weise kann die thermische Dehnung insbesondere des MgO kompensiert werden. Thermomechanische Spannungen werden vermieden. Abplatzungen (sogenanntes "spalling") können verhindert oder zumindest reduziert werden.

Die Erfindung rückt deshalb von der Lehre der DE 100 10 918 A1 ab, CaO als eigenständige Komponente in höchster Reinheit dem Versatz zuzufügen. Vielmehr wird gezielt eine CaO-haltige Komponente im Versatz eingesetzt, die verschiedene Fremdoxide in den Versatz einbringen kann, beispielsweise Fe₂O₃. Auf diese Weise wird beim Brennen eines aus dem Versatz hergestellten Formteils als Nebenphase unter anderem Dicalciumferrit gebildet. Dicalciumferrit verleiht dem Formteil bei höheren Temperaturen (Einsatztemperatur) eine gewisse Gefügeelastizität, so dass Spannungen besser aufgenommen beziehungsweise abgebaut werden können. Eisenoxid wirkt außerdem beim Steinbrand als Mineralisator.

Der Eisenoxidgehalt (im Versatz) liegt erfindungsgemäß zwischen 1 und 8 Gew.-%.

Die Erfindung rückt also bewusst von den Vorgaben im Stand der Technik ab, möglichst wenig Fe₂O₃, in jedem Fall < 1,0 Gew.-%, im Versatz zu berücksichtigen.

Eine Möglichkeit, den Fe₂O₃-Gehalt einzustellen, ist beispielsweise die Verwendung von eisenoxidreichem Dolomit. Dadurch wird gleichzeitig ein MgO-Anteil in den Versatz eingebracht. Ein weiterer Anteil an MgO wird durch eine rein magnesitische Komponente, beispielsweise Schmelzmagnesia oder Sintermagnesia bereitgestellt.

Ein weiteres wesentliches Unterscheidungskriterium zum Versatz gemäß DE 100 10 918 A1 liegt in der Auswahl der Korngrößen für die einzelnen Komponenten. Während im Stand der Technik die CaO-haltige Komponente in einer Kornfraktion < 1 mm eingesetzt werden soll, können bei der Erfindung sowohl die MgO- als auch die CaO-haltigen Komponenten im Versatz in einer Korngröße < 8 mm vorliegen. Die CaO-haltige Komponente kann nach einer Ausführungsform eine Korngröße > 2 mm und/oder < 5 mm aufweisen. Dies schließt es nicht aus, dass auch eine CaO-haltige Komponente oder CaO-Fraktion mit einem Feinkornanteil < 1 mm oder sogar < 0,3 mm eingesetzt wird. Dieser kann unabhängig von der Grobkomponente (> 2 mm) Bestandteil des Versatzes sein.

Für die MgO-haltige Komponente, soweit sie nicht als Dolomit bereits erfasst ist, liegen die Korngrößen vor allem im Bereich < 4 mm. Beispielsweise können 1/5 bis 1/2 dieser MgO-Komponente < 0,3 mm sein, der Rest > 0,3 mm.

In ihrer allgemeinsten Ausführungsform betrifft die Erfindung einen gebrannten keramischen Formkörper mit den Merkmalen gemäß Anspruch 1 sowie ein zugehöriges Herstelllungsverfahren gemäß Anspruch 5.

Die Summe der Versatzkomponenten a) bis d) soll 100 Gew.-% ergeben. Ein etwaiges Bindemittel, Wasser etc. wird separat berechnet.

Die aus diesem Versatz gebildeten Formteile lassen sich als Magnesiaerzeugnisse klassifizieren, die CaO- und Fe₂O₃-haltige Zusätze aus dem Versatz umfassen, wobei diese Zusätze dem gebrannten Produkt Eigenschaften verleihen, die bisher nur mit hoch CaO-haltigen Produkten erreicht werden konnten. Weiter lassen sich mit Formteilen aus diesem Versatz hervorragende Korrosionseigenschaften wie bei reinen Magnesiasteinen erreichen. Diese Eigenschaften sind verknüpft mit einer guten Infiltrationsbeständigkeit sowie verbesserter Gefügeelastizität, wie sie bisher nur bei rein dolomitischen Formkörpern bekannt waren. Formkörper sind alle geformten Teile wie Steine, Platten, Ringe etc.

Das beiliegende Bild ist ein Anschliff eines erfindungsgemäßen Steins mit der angegebenen Vergrößerung.

Das Steingefüge wird bestimmt von groben dolomitischen Körnern (1) mit einem Fe₂O₃-Gehalt von ca. 3 Gew.-%. Zwischen diesen groben (im Anschliff: dunklen) Körnern sind die im Vergleich kleineren MgO-Körner zu erkennen (2), zwischen denen MgO-CaO-Schmelzzusätze (3) zu erkennen sind.

Das dargestellte Produkt, welches bei 1.550° C gebrannt wurde, besitzt folgende Eigenschaftswerte:

| | | | |
|---|---|---|---|
| Rohdichte | DIN-EN 993-1: 1995 | g/cm³ | 3,05 |
| Offene Porosität | DIN-EN 993-1: 1995 | Vol.-% | 13 |
| Gasdurchlässigkeit | DIN-EN 993-4: 1995 | nPm | 4 |
| Kaltdruckfestigkeit | DIN-EN 993-5: 1998 | MPa | 70 |
| Druckerweichen T_{0,5} | DIN-EN 993-8: 1997 | °C | 1650 |

Ein Versatzbeispiel ist:

| | |
|---|---|
| Sintermagnesia ¹⁾ (0, 3 - 4 mm) | 33 Gew.-% |
| Sintermagnesia ¹⁾ (< 0,3 mm) | 12 Gew.-% |
| CaO+MgO-Sintermaterial ²⁾ (2 bis 5 mm) | 35 Gew.-% |
| CaO+MgO-Schmelzmaterial (< 0,3 mm) | 20 Gew.-% |

| | |
|---|---|
| ¹⁾ mit 96 Gew.-% MgO ²⁾ mit 41 Gew.-% CaO und 3,8 Gew.-% Fe₂O₃. | |

Der Gesamtgehalt an MgO beträgt ca. 71 Gew.-%, der Gesamtgehalt an CaO ca. 26 Gew.-%, der Gesamtgehalt an Fe₂O₃ ca. 1,6 Gew.-%.

Die aus dieser Werkstoffmischung (Versatz) bei 1.400° C gebrannten Steine zeigen einen Wert T_{0,5} von 1.520° C und einen guten Abplatzwiderstand.

Wie bereits ausgeführt, kann die MgO-haltige Komponente beispielsweise aus Sintermagnesia in einer Kornfraktion < 5 mm bestehen. Ein Teil des MgO wird durch ein Grobkorn aus Sinterdolomit in einer Fraktion 2 bis 8 mm bereitgestellt.

Der MgO- und CaO-Anteil kann auch über ein sogenanntes MgO + CaO-Schmelzmaterial (co-smelter) in den Versatz eingebracht werden [(3) im Anschliffbild].

Soweit keine Sinterdolomite zur Verfügung stehen, um den erforderlichen Fe₂O₃-Anteil im Versatz zu erreichen, kann das Eisenoxid durch Fremdkomponenten beigemischt werden, beispielsweise in Form von Zunder.

Der Eisenoxidgehalt wird in der Regel > 1,4 Gew.-% betragen, beispielsweise 1,5 bis 2 Gew.-%, er kann aber auch auf Werte > 2 Gew.-%, beispielsweise 2 bis 4 Gew.-% eingestellt werden, wobei häufig eine Obergrenze von 3 Gew.-% genügen wird, um die gewünschte Gefügeflexibilität zu erreichen. Die Gefügeflexibilität lässt sich auch wie folgt kennzeichnen:

Die Druckerweichungsprüfung gemäß DIN EN 993-8 (1997) ergibt T_{0,5}-Werte zwischen 1.400° C und 1.700° C, wobei Werte zwischen 1.500° C und 1.650° C günstig sind.

Die weiteren Fremdoxide wie Al₂O₃, MnO können auf Werte von jeweils < 2 oder < 1 Gew.-% eingestellt werden.

Die MgO-haltige Komponente, soweit sie als rein magnesitische Komponente eingebracht wird, sollte einen Reinheitsgrad von > 90 Gew.-%, insbesondere > 95 Gew.-% aufweisen.

Die mittlere Korngröße (d₅₀) der CaO-haltigen Komponente kann größer als die mittlere Korngröße (d₅₀) der MgO-haltigen Komponente gewählt werden, wobei die MgO-haltige Komponente mit einem Reinheitsgrad > 90 Gew.-%, insbesondere > 95 Gew.-% gemeint ist.

Das vorgenannte Verhältnis gilt nach einer Ausführungsform auch bezüglich einer Korngröße von jeweils "d₉₅".

Innerhalb der angegebenen Oxidanalyse lassen sich unter Verwendung der genannen MgO- und CaO-haltigen Komponenten ungebrannte keramische Formkörper herstellen, wobei in der Regel ein Bindemittel dem Versatz zugemischt wird. Das Bindemittel kann zum Beispiel ein kohlenstoffhaltiges temporäres Bindemittel wie Paraffin sein.

Aus diesem ungebrannten Erzeugnis kann unmittelbar ein gebrannter Formkörper hergestellt werden, wobei der Brennvorgang in einem üblichen Ofen bei Temperaturen über 1.400° C erfolgt.

Die Versatzkomponenten, ihre Korngröße sowie die Brenntemperatur lassen sich so auswählen, dass der gebrannte Formkörper eine Rohdichte > 3 g/cm³ aufweist. Aus der Rohdichte resultiert eine relativ geringe offene Porosität, die nach einer Ausführungsform mit < 14 Vol.-% angegeben wird, wobei Werte < 13,5 oder < 13 Vol.-% angestrebt werden.

Die Porosität und Rohdichte ist für die erforderliche Infiltrationsbeständigkeit verantwortlich. Die Erzeugnisse besitzen gute Abplatzbeständigkeit und hohen Korrosionswiderstand. Sie eignen sich auch für schwierige

Einsatzgebiete bei der Stahlerzeugung sowie in Drehrohröfen, zum Beispiel zur Zementherstellung. Dabei kann der Gehalt an Fe₂O₃ auch über 4 Gew.-% liegen, zum Beispiel 6 oder 8 Gew.-%, womit bei geringeren Anwendungstemperaturen die Gefügeflexibilität noch weiter erhöht wird.

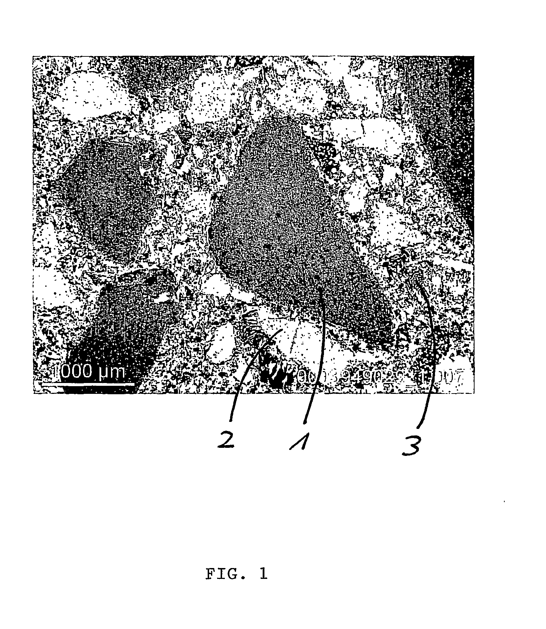

## Patentansprüche

1. Gebrannter keramischer Formkörper, hergestellt aus einem Versatz, der mindestens eine rein magnesitische Komponente und mindestens eine CaO-haltige Komponente, jeweils in einer Korngröße < 8 mm umfasst und folgende Oxidanalyse aufweist:
a) 50 bis 90 Gew.-% MgO,
b) 8 bis 40 Gew.-% CaO,
c) 1 bis 8 Gew.-% Fe₂O₃,
d) bis zu 10 Gew.-% Sonstige, davon SiO₂ < 1 Gew.-%, wobei die Summe von a) bis d) 100 Gew.-% ergibt, der nach Brand bei einer Temperatur > 1.400° C einen Prüfwert T_{0,5} gemäß DIN-EN 993-8 (1997) zwischen 1.400 und 1.700° C aufweist und Dicalciumferrit enthält.

2. Formkörper nach Anspruch 1 mit einer Rohdichte > 3 g/cm³.

3. Formkörper nach Anspruch 1 mit einer offenen Porosität < 14 Vol.-%.

4. Formkörper nach Anspruch 1, bei dem die rein magnesitische Komponente einen Reinheitsgrad von > 90 Gew.-% MgO aufweist.

5. Verfahren zur Herstellung eines gebrannten, keramischen, Fe₂O₃-haltigen Formkörpers, der einen Prüfwert T_{0,5} gemäß DIN-EN 993-8 (1997) zwischen 1.400 und 1.700° C aufweist, bei dem ein Versatz, der mindestens eine rein magnesitische Komponente und mindestens eine CaO-haltige Komponente, jeweils in einer Korngröße < 8 mm umfasst und folgende Oxidanalyse aufweist:
a) 50 bis 90 Gew.-% MgO,
b) 8 bis 40 Gew.-% CaO,
c) 1 bis 8 Gew.-% Fe₂O₃,
d) bis zu 10 Gew.-% Sonstige, davon SiO₂ < 1 Gew.-%, wobei die Summe von a) bis d) 100 Gew.-% ergibt, zu dem Formkörper verarbeitet und unter Bildung von Dicalciumferrit als Nebenphase bei Temperaturen > 1.400° C gebrannt wird.

6. Verfahren nach Anspruch 5, bei dem mindestens eine CaO-haltige Komponente des Versatzes eine Korngröße > 2 mm aufweist.

7. Verfahren nach Anspruch 5, bei dem mindestens eine CaO-haltige Komponente des Versatzes eine Korngröße < 5 mm aufweist.

8. Verfahren nach Anspruch 5, bei dem die MgO-haltige Versatz-Komponente mit einem Reinheitsgrad > 90 Gew.-% eine Korngröße < 5 mm aufweist.

9. Verfahren nach Anspruch 5, bei dem die MgO-haltige Versatz-Komponente mit einem Reinheitsgrad > 90 Gew.-% eine Kornfraktion < 2 mm aufweist.

10. Verfahren nach Anspruch 5, bei dem die MgO-haltige Versatz-Komponente mit einem Reinheitsgrad > 90 Gew.-% eine Kornfraktion < 0,3 mm aufweist.

11. Verfahren nach Anspruch 5, bei dem die mittlere Korngröße (d₅₀) der CaO-haltigen Versatz-Komponente größer als die mittlere Korngröße (d₅₀) der MgO-haltigen Versatz-Komponente mit einem Reinheitsgrad > 90 Gew.-% ist.

12. Verfahren nach Anspruch 5, bei dem die Korngröße (d₉₅) der CaO-haltigen Versatz-Komponente größer als die Korngröße (d₉₅) der MgO-haltigen Versatz-Komponente mit einem Reinheitsgrad > 90 Gew.-% ist.

13. Verfahren nach Anspruch 5, bei dem mindestens eine CaO-haltige Versatz-Komponente eine Korngröße < 1 mm aufweist.

14. Verfahren nach Anspruch 5, bei dem mindestens eine CaO-haltige Versatz-Komponente eine Korngröße < 0,3 mm aufweist.

15. Verfahren nach Anspruch 5 mit einem Fe₂O₃-Gehalt des Versatzes > 1,5 Gew.-%.

16. Verfahren nach Anspruch 5 mit einem Fe₂O₃-Gehalt des Versatzes > 2 Gew.-%.

17. Verfahren nach Anspruch 5 mit einem Anteil einer MgO-CaO-Schmelzkorn-Komponente im Versatz.

18. Verfahren nach Anspruch 5, bei dem die Oxidanalyse des Versatzes mindestens eines der folgenden Oxide aufweist: MnO, TiO₂, ZrO₂, SiO₂.

19. Verfahren nach Anspruch 5, bei dem die rein magnesitische Komponente einen Reinheitsgrad von > 90 Gew.-% MgO aufweist.

20. Verwendung eines Formkörpers nach Anspruch 1 zur Auskleidung eines Drehrohrofens.

## Claims

1. Fired ceramic moulded body, produced from a batch comprising at least one purely magnesitic component and at least one CaO-containing component, each in a particle size of < 8 mm, and exhibiting the following oxide analysis:
a) 50 to 90 wt.% MgO,
b) 8 to 40 wt.% CaO,
c) 1 to 8 wt. % Fe₂O₃,
d) up to 10 wt.% of others, including < 1 wt.% of SiO₂, the sum of a) to d) adding to 100 wt.%, which after being fired at a temperature of > 1400°C has a test value T_{0.5} as defined in DIN-EN 993-8 (1997) of between 1400 and 1700°C and contains dicalcium ferrite.

2. Moulded body according to claim 1 having a density of > 3 g/cm³.

3. Moulded body according to claim 1 having an open porosity of < 14 vol.%.

4. Moulded body according to claim 1, wherein the purely magnesitic component has a degree of purity of > 90 wt.% MgO.

5. Process for producing a fired, ceramic, Fe₂O₃-containing moulded body having a test value T_{0.5} as defined in DIN-EN 993-8 (1997) of between 1400 and 1700°C, wherein a batch comprising at least one purely magnesitic component and at least one CaO-containing component, each in a particle size of < 8 mm, and exhibiting the following oxide analysis:
a) 50 to 90 wt.% MgO,
b) 8 to 40 wt.% CaO,
c) 1 to 8 wt.% Fe₂O₃,
d) up to 10 wt.% of others, including < 1 wt.% of SiO₂, the sum of a) to d) adding to 100 wt.%, is processed to form the moulded body and is fired at temperatures of > 1400°C, with formation of dicalcium ferrite as a secondary phase.

6. Process according to claim 5, wherein at least one CaO-containing component of the batch has a particle size of > 2 mm.

7. Process according to claim 5, wherein at least one CaO-containing component of the batch has a particle size of < 5 mm.

8. Process according to claim 5, wherein the MgO-containing batch component with a degree of purity of > 90 wt.% has a particle size of < 5 mm.

9. Process according to claim 5, wherein the MgO-containing batch component with a degree of purity of > 90 wt.% has a size fraction of < 2 mm.

10. Process according to claim 5, wherein the MgO-containing batch component with a degree of purity of > 90 wt.% has a size fraction of < 0.3 mm.

11. Process according to claim 5, wherein the average particle size (d₅₀) of the CaO-containing batch component is greater than the average particle size (d₅₀) of the MgO-containing batch component with a degree of purity of > 90 wt.%.

12. Process according to claim 5, wherein the particle size (d₉₅) of the CaO-containing batch component is greater than the particle size (d₉₅) of the MgO-containing batch component with a degree of purity of > 90 wt.%.

13. Process according to claim 5, wherein at least one CaO-containing batch component has a particle size of < 1 mm.

14. Process according to claim 5, wherein at least one CaO-containing batch component has a particle size of < 0.3 mm.

15. Process according to claim 5 with an Fe₂O₃ content in the batch of > 1.5 wt.%.

16. Process according to claim 5 with an Fe₂O₃ content in the batch of > 2 wt.%.

17. Process according to claim 5 with a proportion of an MgO-CaO smelting particle component in the batch.

18. Process according to claim 5, wherein the oxide analysis of the batch exhibits at least one of the following oxides: MnO, TiO₂, ZrO₂, SiO₂.

19. Process according to claim 5, wherein the purely magnesitic component has a degree of purity of > 90 wt.% MgO.

20. Use of a moulded body according to claim 1 for lining a rotary kiln.

## Revendications

1. Corps moulé en céramique, cuit, préparé à partir d'une charge qui comprend au moins un composant magnésitique pur et au moins un composant contenant CaO, chaque fois avec une granulométrie < 8 mm, et qui présente l'analyse des oxydes suivante :
a) 50 à 90% en poids de MgO,
b) 8 à 40% en poids de CaO,
c) 1 à 8% en poids de Fe₂O₃,
d) jusqu'à 10% en poids d'autres oxydes, dont SiO₂ < 1% en poids,
où la somme de a) à d) donne 100% en poids, qui présente après cuisson à une température > 1400°C, une valeur de test T_{0,5} selon DIN-EN 993-8 (1997) allant de 1400 à 1700°C et qui contient du ferrite de dicalcium.

2. Corps moulé selon la revendication 1, avec une masse volumique apparente > 3 g/cm³.

3. Corps moulé selon la revendication 1, avec une porosité ouverte < 14% en volume.

4. Corps moulé selon la revendication 1, pour lequel le composant magnésitique pur présente un taux de pureté de > 90% en poids de MgO.

5. Procédé de préparation d'un corps moulé contenant Fe₂O₃, en céramique, cuit, qui présente une valeur de test T_{0,5} selon DIN-EN 993-8 (1997) allant de 1400 à 1700°C, dans lequel une charge, qui comprend au moins un composant magnésitique pur et au moins un composant contenant CaO, chaque fois avec une granulométrie < 8 mm, et qui présente l'analyse des oxydes suivante :
a) 50 à 90% en poids de MgO,
b) 8 à 40% en poids de CaO,
c) 1 à 8% en poids de Fe₂O₃,
d) jusqu'à 10% en poids d'autres oxydes, dont SiO₂ < 1% en poids,
où la somme de a) à d) donne 100% en poids, est traitée en le corps moulé et est cuite à des températures > 1400°C, avec formation de ferrite de dicalcium comme phase secondaire.

6. Procédé selon la revendication 5, pour lequel le au moins un composant contenant CaO de la charge présente une granulométrie > 2 mm.

7. Procédé selon la revendication 5, pour lequel le au moins un composant contenant CaO de la charge présente une granulométrie < 5 mm.

8. Procédé selon la revendication 5, pour lequel le composant contenant MgO de la charge présente un taux de pureté > 90% en poids et une fraction granulométrique < 5 mm.

9. Procédé selon la revendication 5, pour lequel le composant contenant MgO de la charge présente un taux de pureté > 90% en poids et une fraction granulométrique < 2 mm.

10. Procédé selon la revendication 5, pour lequel le composant contenant MgO de la charge présente un taux de pureté > 90% en poids et une fraction granulométrique < 0,3 mm.

11. Procédé selon la revendication 5, pour lequel la granulométrie moyenne (d₅₀) du composant contenant CaO de la charge est supérieure à la granulométrie moyenne (d₅₀) du composant contenant MgO de la charge, avec un taux de pureté > 90% en poids.

12. Procédé selon la revendication 5, pour lequel la granulométrie (d₉₅) du composant contenant CaO de la charge est supérieure à la granulométrie (d₉₅) du composant contenant MgO de la charge, avec un taux de pureté > 90% en poids.

13. Procédé selon la revendication 5, pour lequel au moins un composant contenant CaO de la charge présente une granulométrie < 1 mm.

14. Procédé selon la revendication 5, pour lequel au moins un composant contenant CaO de la charge présente une granulométrie < 0,3 mm.

15. Procédé selon la revendication 5, avec une teneur en Fe₂O₃ de la charge > 1,5% en poids.

16. Procédé selon la revendication 5, avec une teneur en Fe₂O₃ de la charge > 2% en poids.

17. Procédé selon la revendication 5, avec une proportion d'un composant à grains de fusion MgO-CaO dans la charge.

18. Procédé selon la revendication 5, pour lequel l'analyse des oxydes de la charge présente au moins un des oxydes suivants : MnO, TiO₂, ZrO₂, SiO₂.

19. Procédé selon la revendication 5, pour lequel le composant magnésitique pur présente un taux de pureté > 90% en poids de MgO.

20. Utilisation d'un corps moulé selon la revendication 1, pour le chemisage d'un four tubulaire tournant.
